# EUROPÄISCHE PATENTSCHRIFT

(11) **EP 1 011 189 B1**
(45) Veröffentlichungstag und Bekanntmachung des Hinweises auf die Patenterteilung: **28.06.2006**
(21) Anmeldenummer: 99123808.0
(22) Anmeldetag: 01.12.1999
(51) Int. Cl.: H02M 5/458

(54) **Verfahren und Schaltungsanordnung zur Anpassung der Zwischenkreisspannung an die Versorgungsspannung**
Method and circuit for adjusting the intermediate link voltage to the supply voltage
Procédé et circuit pour ajuster la tension de liaison intermediaire à la tension d'alimentation

(30) Priorität: 08.12.1998 DE 19856551
(43) Veröffentlichungstag der Anmeldung: 21.06.2000
(73) Patentinhaber: Dr. Johannes Heidenhain GmbH, 83292 Traunreut (DE)
(72) Erfinder: Huber, Norbert, 83317 Teisendorf (DE); Ritz, Franz, 83236 Übersee (DE)

(56) Entgegenhaltungen:
- US-A- 5 355 295
- ZARGARI N R ET AL: "A NEAR UNITY POWER FACTOR INPUT STAGE WITH MUNIMUM CONTROL REQUIREMENTS FOR AC DRIVE APPLICATIONS" IEEE TRANSACTIONS ON INDUSTRY APPLICATIONS, IEEE INC. NEW YORK, US, Bd. 31, Nr. 5, 1. September 1995 (1995-09-01), Seiten 1129-1135, XP000535592 ISSN: 0093-9994
- HORST VÖLZ: "Elektronik" 1986 , AKADEMIE-VERLAG BERLIN , BERLIN XP002247967 * Seite 580 *

## Beschreibung

Die Erfindung betrifft ein Verfahren zur Anpassung der Zwischenkreisspannung eines rückspeisefähigen Umrichters an die zugeführte Versorgungsspannung nach Anspruch 1 und eine Schaltungsanordnung zur Durchführung des Verfahrens nach Anspruch 3.

Aus der JP 60066675 A ist bekannt, daß bei einer Überlastung eines Umrichters die Zwischenkreisspannung angehoben wird. Sobald der maximal zulässige oder ein größerer Strom durch den Umrichter ausgegeben wird, wird ein Überlastdetektor aktiviert und die Gleichspannung auf dem Zwischenkreis erhöht.

Aus der JP 60066675 ist nicht bekannt, daß die Gleichspannung an die Versorgungsspannung angepaßt wird.

Die DE 30 21 119 A1 offenbart eine Wechselrichterschaltung zum Betreiben eines in der Drehzahl steuerbaren Asynchronmotors. Dabei wird gegen beim Generatorbetrieb des Asynchronmotors oder im Spannungsversorgungsnetz auftretende Überspannungen und dadurch resultierende zu große Ströme die Frequenz, mit der der Asynchronmotor angesteuert wird erhöht.

Dieses Vorgehen weist den Nachteil auf, daß durch Erhöhen der Frequenz, mit der der Asynchronmotor angesteuert wird, dessen Drehzahl steigt. Dadurch kann bei Überspannungen keine Drehzahlregelung mehr durchgeführt werden, was für eine große Anzahl Anwendungen jedoch permanent möglich sein muß.

Aus der DE 36 01 160 C2 ist ein Steuerverfahren für einen Frequenzumrichter für den Anlauf, die Drehzahlverstellung, das Bremsen und Positionieren von Drehstrom-Asynchronmotoren bekannt. Dabei umfaßt der Frequenzumrichter einen Dreh- oder Wechselstromgleichrichter und einen Glättungskondensator als Zwischenstromkreis sowie eine nachgeschaltete Drehstrombrückenschaltung aus Leistungstransistoren und einem zugeordneten Pulsbreitenmodulator zur Umwandlung der Zwischenkreisgleichspannung in Wechselspannung mit einstellbarer Frequenz und Amplitude. Durch eine Schützschaltung werden nach Überschreiten der Grenzspannung im Zwischenkreis die Transistoren im Wechselrichter gesperrt. Dadurch wird der Energiefluß im Wechselrichter unterbrochen und durch Energieverbrauch ein Absinken der Zwischenkreisspannung verursacht. Nach dem Absinken der Zwischenkreisspannung unter die Abschalt-Grenzspannung werden die Leistungstransistoren wieder freigegeben. In der Abschaltphase wird die Ansteuerfrequenz der Leistungstransistoren stark abgesenkt und bei Wiedereinschalten werden die Leistungstransistoren mit niedriger Frequenz wieder zugeschaltet.

Dabei ist von Nachteil, daß bei einer zu hohen Versorgungsspannung die Leistungstransistoren permanent ein- und ausgeschaltet werden, was zu einer permanent schwankenden Ausgangsleistung der angeschlossenen Motoren führt. Durch diesen nicht kontinuierlichen Motorlauf sind nicht die für die meisten Anwendungen benötigten konstanten Betriebsbedingungen zu erreichen. Weiterhin werden durch das permanente Schaltet hoher Ströme starke elektro-magnetische Störfelder erzeugt, die zusätzlich abgeschirmt werden müssen, und es werden die Leistungstransistoren sehr stark beansprucht, so daß diese häufiger defekt sind.

Aus der DE 41 20 611 C2 ist ein Verfahren zur Begrenzung der Zwischenkreisspannung eines einen Drehstromantrieb mit variabler Drehzahl speisenden Spannungszwischenkreis-Umrichter bekannt. Dieser weist einen auf den Sollwert des Wirkstromreglers wirkenden Begrenzungsregler auf, der den Strom im generatorischen Betrieb derart begrenzt, daß die Zwischenkreisspannung einen bestimmten Wert nicht überschreitet. Weiterhin wird ein Wirkstromsollwert vorgegeben, durch den bei Netzausfall die Zwischenkreisspannung auf einem ausreichend hohen Wert gehalten wird. Dabei wird der Wirkstromsollwert durch einen überlagerten Drehzahlregler, dem bei Netzausfall der Sollwert gesperrt wird, vorgegeben. Dem Begrenzungsregler wird bei generatorischem Betrieb ein ersten oberer Wert und bei Netzausfall ein zweiter unterer Wert als Sollwert für die Zwischenkreisspannung vorgegeben.

Dabei ist von Nachteil, daß lediglich bei einem generatorischen Betrieb und einem Netzausfall die Zwischenkreisspannung geregelt wird. Liegt eine überhöhte Netzspannung vor, sind keine regelungstechnischen Maßnahmen vorgesehen, um einen fehlerfreien Betrieb einer an den Umrichter angeschlossenen Last sicherzustellen.

Aus der DE 43 22 379 C1 ist eine Schaltungsanordnung zum Schutz von Halbleiterschaltern beim Kippen einer netzgeführten, Energie in das Netz zurückspeisenden Netzstromrichterbrücke bekannt. Diese Schaltungsanordnung ermöglicht es, daß bei einer Überspannung im Netz oder bei einem über die Netzstromrichterbrücke fließenden Überstrom, daß durch einen Kurzschlußthyristor der zwischenkreisseitige Ausgang der Netzstromrichterbrücke kurzgeschlossen wird. Dadurch kann die Zwischenkreisgleichspannung verringert werden, so daß ein aufgrund einer im Netz auftretenden Überspannung in der Netzrichterbrücke auftretender Überstrom beseitigt wird.

Dabei ist von Nachteil, daß über den Kurzschlußthyristor sehr große Ströme fließen, die durch die Überspannung im Netz, welches als ideale Stromquelle angesehen werden kann, hervorgerufen werden. Liegt im Netz permanent eine Überspannung vor, fließt durch den Kurzschlußthyristor permanent ein Strom, was zu einer starken Erwärmung und Brandgefahr führt. Weiterhin verursacht dies eine Überlastung der Netzstromrichterbrücke, da zusätzlich zu dem im Wechselrichter für die Last benötigten Strom auch der über den Kurzschlußthyristor fließende Strom gleichgerichtet werden muß.

Im Artikel "A near unity power factor input stage with minimum control requirements for AC drive applications", IEEE Inc., New York, US, Bd. 31, Nr. 5, ist ein Rückspeisefähiger Umrichter beschrieben, dessen Zwischenkreisspannung proportional zur Netzspannung ist.

Rückspeisefähige Umrichter mit Gleichspannungszwischenkreis setzen eine mehrphasige (insbesondere dreiphasige) Versorgungsspannung fester Frequenz mittels Halbleiterschaltern und Kommutierungsdrosseln in eine konstante Gleichspannung eines Zwischenkreises und anschließend mittels Wechselrichter in eine dreiphasige Versorgungsspannung mit einstellbarer Frequenz für den zu steuernden Motor um. Die Motordrehzahl kann dann durch Verändern der einstellbaren Frequenz gesteuert bzw. geregelt werden. Es besteht dabei das Problem, daß bei Überspannung in der Spannungsversorgung die Gleichspannung des Zwischenkreises durch die Gleichrichtung der Versorgungsspannung mittels der Freilaufdioden unzulässig erhöht wird. Die Halbleiterschalter, die zur Einstellung der konstanten Zwischenkreisspannung gesteuert werden, leiten in einem solchen Fall die Überspannung im Zwischenkreis wieder in das Spannungsversorgungsnetz ab, was zu unzulässig großen Strömen und damit zu Schäden führen kann.

Es stellt sich daher die Aufgabe, ein Verfahren anzugeben, durch das unzulässig hohe Ströme im Umrichter, die bei einer Überspannung im Spannungsversorgungsnetz auftreten, möglichst weitgehend verhindert werden, auch wenn die von extern an den Umrichter angelegte Versorgungsspannung um deutlich mehr als die zulässige Bandbreite schwankt. Weiterhin soll eine Schaltungsanordnung angegeben werden, die das Verfahren realisiert und nur geringe Änderungen an den bekannten Umrichtern erfordert. Die erfindungsgemäße Schaltungsanordnung soll dabei möglichst kostengünstig realisierbar sein.

Diese Aufgabe wird durch ein Verfahren mit den Merkmalen des Anspruchs 1 und eine Schaltungsanordnung mit den Merkmalen des Anspruchs 4 oder 5 gelöst.

Vorteilhafte Ausführungsformen des erfindungsgemäßen Verfahrens und der erfindungsgemäßen Schaltungsanordnung ergeben sich aus den Merkmalen der jeweils abhängigen Ansprüche.

Das erfindungsgemäße Verfahren weist den Vorteil auf, daß die Zwischenkreisgleichspannung abhängig von der Versorgungsspannung derart geregelt wird, daß die Zwischenkreisgleichspannung immer über dem Wert der gleichgerichteten Versorgungsspannung liegt, so daß keine unzulässig großen Ströme fließen. Dadurch können für unterschiedliche Versorgungsspannungen verschiedener Spannungsversorgungsnetze identische Umrichter benutzt werden, da die Zwischenkreisgleichspannung automatisch an die Versorgungsspannung angepaßt wird. Dadurch sinkt auch der Aufwand für Fertigung und Lagerhaltung.

Einzelheiten und weitere Vorteile der Erfindung werden im folgenden anhand der in der Zeichnung dargestellten Ausführungsform näher erläutert.

Es zeigt:
- Figur 1:: Eine mögliche Realisierungsform des Reglers für die Zwischenkreisgleichspannung,
- Figur 2:: einen möglichen erfindungsgemäßen Umrichter,
- Figur 3:: einen Umrichter entsprechend dem Stand der Technik,
- Figur 4:: einen möglichen Spannungsverlauf der vom Spannungsversorgungsnetz zur Verfügung gestellten Versorgungsspannung und
- Figur 5:: eine alternative Realisierungsform des Reglers für die Zwischenkreisspannung.

Im folgenden wird davon ausgegangen, daß das erfindungsgemäße Verfahren bei einem Umrichter angewendet wird, welchem eine dreiphasige Wechselspannung konstanter Frequenz aus einem Spannungsversorgungsnetz zugeleitet wird und der eine dreiphasige Wechselspannung veränderlicher Frequenz an eine Last, insbesondere an einen Elektromotor, abgibt.

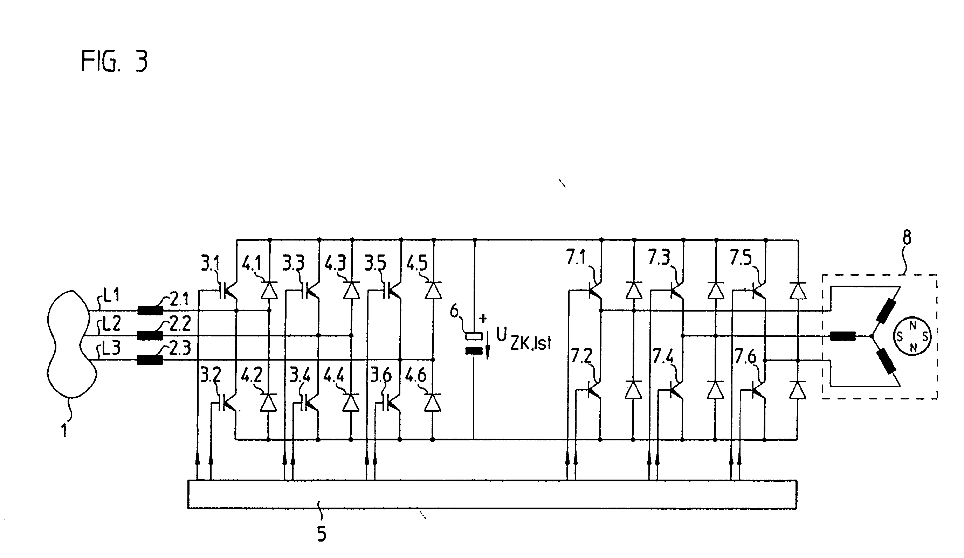

Gemäß Figur 3 weist ein herkömmlicher Umrichter, der bereits aus dem Stand der Technik bekannt ist, für jede der drei Phasen L1, L2 und L3 des Spannungsversorgungsnetzes 1 eine Kommutierungsdrossel 2.1, 2.2 und 2.3 auf. Die Ausgangssignale der Kommutierungsdrosseln 2.1, 2.2 und 2.3 werden für jede Phase je zwei Schalttransistoren 3.1 und 3.2, 3.3 und 3.4 sowie 3.5 und 3.6 zugeleitet, wovon einer der beiden Schalttransistoren in Emitterschaltung und einer in Kollektorschaltung betrieben wird. Dadurch können die Ausgänge der Kommutierungsdrosseln 2.1, 2.2 und 2.3 der drei Phasen L1, L2 und L3 wahlweise mit einem Pol eines Kondensators 6 verbunden werden. Gesteuert werden die Schalttransistoren 3.1 bis 3.6 über ihre Basisanschlüsse, die mit einer Steuereinrichtung 5 verbunden sind. Die Steuereinrichtung 5 schaltet die Schalttransistoren 3.1 bis 3.6 derart in den leitenden oder sperrenden Zustand, daß die Zwischenkreisgleichspannung U_{ZK, ist} konstant einen voreingestellten, möglichst lastunabhängigen Wert aufweist.

Den insgesamt sechs Schalttransistoren 3.1 bis 3.6 sind sechs Freilaufdioden 4.1 bis 4.6 parallelgeschaltet, die den Strom der Kommutierungsdrosseln 2.1, 2.2 und 2.3 nach dem Ausschalten des jeweils zugehörigen Schalttransistors 3.1 bis 3.6 unter Berücksichtigung der richtigen Polung in den Zwischenkreis ableiten. Die Ausgangssignale der sechs Schalttransistoren 3.1 bis 3.6 und der sechs Freilaufdioden 4.1 bis 4.6 werden durch den Kondensator 6 des Zwischenkreises verbunden, welcher für die Glättung der Zwischenkreisgleichspannung U_{ZK, ist} benutzt wird. Als Kondensator 6 wird vorzugsweise ein Elektrolytkondensator benutzt, der eine möglichst große Kapazität aufweist.

Die derart im Zwischenkreis erzeugte Gleichspannung wird anschließend in einem Wechselrichter in die benötigten Steuersignale, vorzugsweise für einen Elektromotor, umgesetzt. Hierfür weist der Wechselrichter sechs Leistungstransistoren 7.1 bis 7.6 auf, die die Last 8, welche insbesondere aus einem Elektromotor besteht, mit den benötigten Strömen und Spannungen dreiphasig versorgt. Gesteuert werden die Leistungstransistoren 7.1 bis 7.6 durch eine Steuereinrichtung 5, die abhängig von den gewünschten Betriebsparametern der Last 8 die für die Leistungstransistoren 7.1 bis 7.6 erforderlichen Steuersignale bestimmt. Die Leistungstransistoren 7.1 bis 7.6 werden dabei bevorzugt durch IGBTs, MCTs oder Darlington-Schaltungen realisiert.

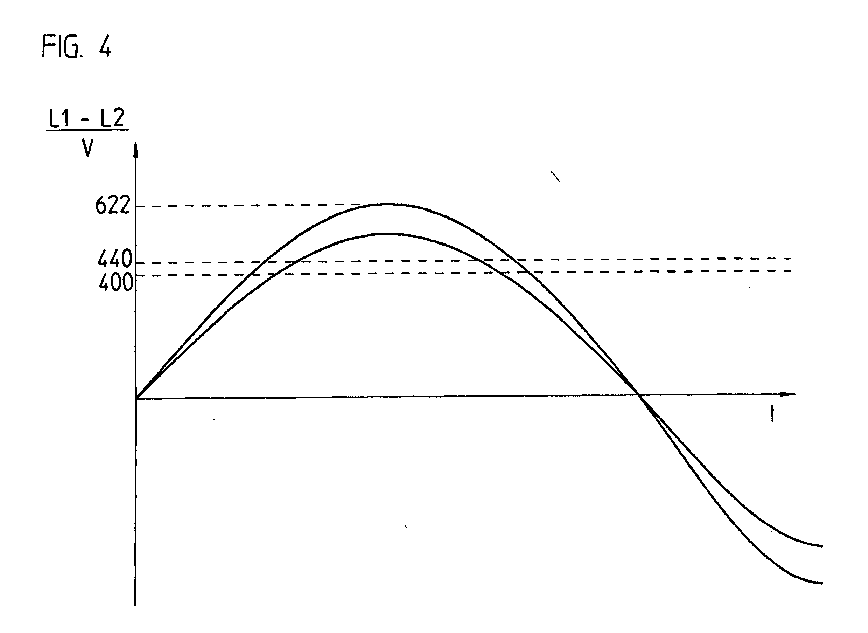

Das Spannungsversorgungsnetz 1 weist, wie in Fig. 4 für die Phase L1 exemplarisch dargestellt, eine Sinusspannung mit dem Effektivwert von 400V auf, die eine maximale Spannungsabweichung von ±10 % nicht überschreiten sollte, so daß maximal eine Sinusspannung mit einem Effektivwert von 440V auftreten kann. Wird dann die Zwischenkreisgleichspannung U_{ZK, ist} auf einen höheren als den maximal zulässigen gleichgerichteten Spitzenwert U_{N} der Versorgungsspannung von 622V (622V = 400V * 1,1 * √2) dieser Effektivspannung durch die Transistoren 3.1 bis 3.6 eingestellt, treten keine Probleme auf, solange der Effektivwert von 440V nicht überschritten wird.

Sollte aber im Spannungsversorgungsnetz 1 eine über 440V hinausgehende Überspannung auftreten, werden durch die Freilaufdioden 4.1 bis 4.6 des Umrichters die negativen und positiven Spannungsspitzen der Sinusspannung auf den Zwischenkreis durchgeschaltet, da die vom Spannungsversorgungsnetz 1 gelieferte Spitzenspannung dann größer ist als die Gleichspannung des Zwischenkreises, was zum Durchschalten der Freilaufdioden 4.1 bis 4.6 führt. Das führt wiederum dazu, daß die Zwischenkreisgleichspannung U_{ZK, ist} erhöht wird. Gleichzeitig versucht die Steuereinheit 5 aber die Zwischenkreisgleichspannung U_{ZK, ist} konstant bei 622V zu halten und steuert die Transistoren 3.1 bis 3.6 derart, daß die nunmehr erhöhte Gleichspannung wieder an eine andere Phase des Spannungsversorgungsnetzes 1, die gerade keine Spitzenspannung aufweist, abgeleitet wird.

Dadurch wird die Spitzenspannung wieder ins Spannungsversorgungsnetz 1 zurückgespeist, wobei ein unzulässig hoher Strom entsteht, da über zumindest eine der Freilaufdioden 4.1 bis 4.6 und einen der Transistoren 3.1 bis 3.6 eine erste Phase des Spannungsversorgungsnetzes 1 mit einer zweiten Phase ohne zwischengeschaltete Last verbunden wird. Dieser unzulässig hohe Strom hat zumindest eine wesentliche Erwärmung des Umrichters zur Folge. Ohne zusätzliche Schutzmaßnahmen kann im Extremfall Brandgefahr entstehen oder ein Ausfall des Umrichters aufgrund zerstörter Halbleiter auftreten.

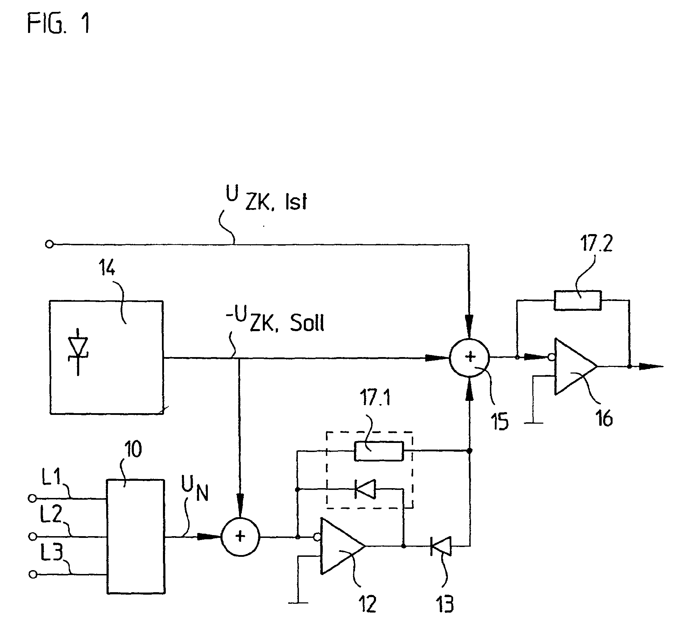

Um dies zu vermeiden, wird erfindungsgemäß die Zwischenkreisgleichspannung U_{ZK, ist} an die vom Spannungsversorgungsnetz 1 gelieferte Versorgungsspannung bzw. deren gleichgerichteten Spitzenwert U_{N} angepaßt. Figur 1 zeigt eine mögliche Regleranordnung, um die Zwischenkreisgleichspannung U_{ZK, ist} an die Versorgungsspannung anzupassen, so daß die Zwischenkreisgleichspannung U_{ZK, ist} immer größer als der gleichgerichtete Wert der Versorgungsspannung U_{N} ist. Dadurch wird verhindert, daß die Freilaufdioden 4.1 bis 4.6 aufgrund einer zu großen Versorgungsspannung leitend werden und ein unzulässig großer Strom auftritt. Die Regleranordnung gemäß Figur 1 weist einen Gleichrichter 10 auf, der die vom Spannungsversorgungsnetz 1 gelieferte Versorgungsspannung der drei Phasen L1, L2 und L3 gleichrichtet. Der Spitzenwert der gleichgerichteten Versorgungsspannung U_{N} wird zum negativen Sollwert der Zwischenkreisgleichspannung -U_{ZK, Soll} addiert, der durch einen Referenzspannungsgenerator 14 erzeugt wird, und die Summe wird einem invertierenden Eingang eines Operationsverstärkers 12 zugeleitet. Das Ausgangssignal des Operationsverstärkers 12 wird einer Diode 13 zugeleitet, die nur bei negativen Ausgangssignalen des Operationsverstärkers 12 dessen Ausgangssignal weiterleitet, ansonsten jedoch sperrt. Das Ausgangssignal der Diode 13 wird zu dem durch den Referenzspannungsgenerator 14 erzeugten negativen Sollwert der Zwischenkreisgleichspannung -U_{ZK, Soll} und zur tatsächlich vorhandenen Zwischenkreisgleichspannung U_{ZK, ist} im Addierer 15 addiert. Das derart erzeugte Summensignal wird einem invertierenden Eingang eines weiteren Operationverstärkers 16 zugeleitet, dessen Ausgangssignal der Steuereinheit 5 zugeleitet wird, die die Transistoren 3.1 bis 3.6 zur Einstellung der Zwischenkreisgleichspannung U_{ZK, ist} steuert. Die Rückkopplungsbaugruppen 17.1 und 17.2 werden nur dazu benötigt den Arbeitsbereich der Operationsverstärker 12 und 16 einzustellen und deren Stabilität im relevanten Arbeitsbereich sicherzustellen.

Sobald durch das Spannungsversorgungsnetz 1 dem erfindungsgemäßen Umrichter nun eine Überspannung zugeleitet wird, erhöht sich entsprechend der Spitzenwert der gleichgerichteten Versorgungsspannung U_{N,} so daß das dem invertierenden Eingang des Operationsverstärkers 12 zugeleitete Signal positiver und dessen Ausgangssignal negativer wird. Da die Diode 13 bei einem positiven Ausgangssignal des Operationsverstärkers 12 gesperrt hat, wird diese nun leitend und das durch den Addierer 15 an den invertierenden Eingang des Operationsverstärkers 16 ausgegebene Signal wird negativer. Dadurch steigt das durch den Operationsverstärker 16 ausgegebene Signal an. Daran erkennt die Steuereinheit 5, daß die Versorgungsspannung auf dem Spannungsversorgungsnetz 1 gestiegen ist und die tatsächliche Zwischkreisgleichspannung U_{ZK, ist} angehoben werden muß und steuert die Transistoren 3.1 bis 3.6 entsprechend. Die Änderung des Ausgangssignals von Operationsverstärker 16 ist dabei proportional der Änderung der Versorgungsspannung auf den drei Phasen L1, L2 und L3.

In einer alternativen Ausführung kann die Gleichspannung des Zwischenkreises auch in Stufen verändert werden. Sobald der Spitzenwert der gleichgerichteten Versorgungsspannung U_{N} gleich der Zwischenkreisspannung U_{ZK, ist} ist, wird die Zwischenkreisspannung U_{ZK, ist} um einen bestimmten Betrag angehoben. Liegt der Spitzenwert der gleichgerichteten Versorgungsspannung U_{N} aber einen Mindestbetrag unter der Zwischenkreisgleichspannung U_{ZK,ist,} kann diese um einen bestimmten Betrag abgesenkt werden. Dabei ist jedoch ein oberer und unterer Grenzwert voreingestellt, der von der Zwischenkreisspannung U_{ZK, ist} nicht unterschritten bzw. überschritten werden darf.

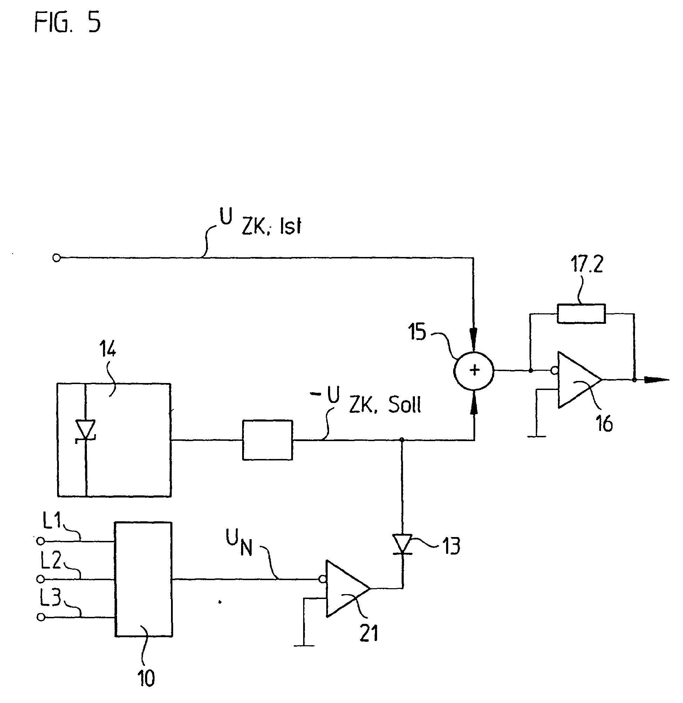

Alternativ ist auch eine besonders einfache Anordnung zur Realisierung der erfindungsgemäßen Schaltungsanordnung möglich, wie in Figur 5 dargestellt. Wie bei der Schaltungsanordnung aus Figur 3, ist mit den Leitern L1, L2 und L3 des Spannungsversorgungsnetzes ein Gleichrichter 10 verbunden, der aus den Wechselspannungen der drei Phasen des Spannungsversorgungsnetzes eine gleichgerichtete Spannung erzeugt. Die Amplitude der gleichgerichteten Spannung U_{N} entspricht dem Spitzenwert der verketteten Spannungen auf den Leitern L1, L2 und L3 des Spannungsversorgungsnetzes. Diese Gleichspannung wird einem invertierenden Eingang eines Operationsverstärkers 21 mit dem Verstärkungsfaktor 1 zugeleitet. Dessen Ausgangssignal wird einer Diode 13 zugeleitet, die sperrt, solange die Versorgungsspannung auf den Leitern L1, L2 und L3 nicht zu unzulässig hohen Strömen im Umrichter führt und die leitet, sobald eine Überspannung im Spannungsversorgungsnetz auftritt. Es wird daher durch das Ausgangssignal der Diode 13 immer dann das vom Referenzspannungsgenerator 14 an den Addierer 15 geleitete Signal beeinflußt, wenn eine Überspannung im Spannungsversorgungsnetz vorliegt. Ist dies nicht der Fall, wird vom Referenzspannungsgenerator 14 der negative Sollwert der Zwischenkreisspannung -U_{ZK, Soll} im Addierer 15 zum Istwert der Zwischenkreisspannung U_{ZK, ist} addiert und derart die dem Regler 16 für die Zwischenkreisspannung zugeleitet Regelabweichung bestimmt.

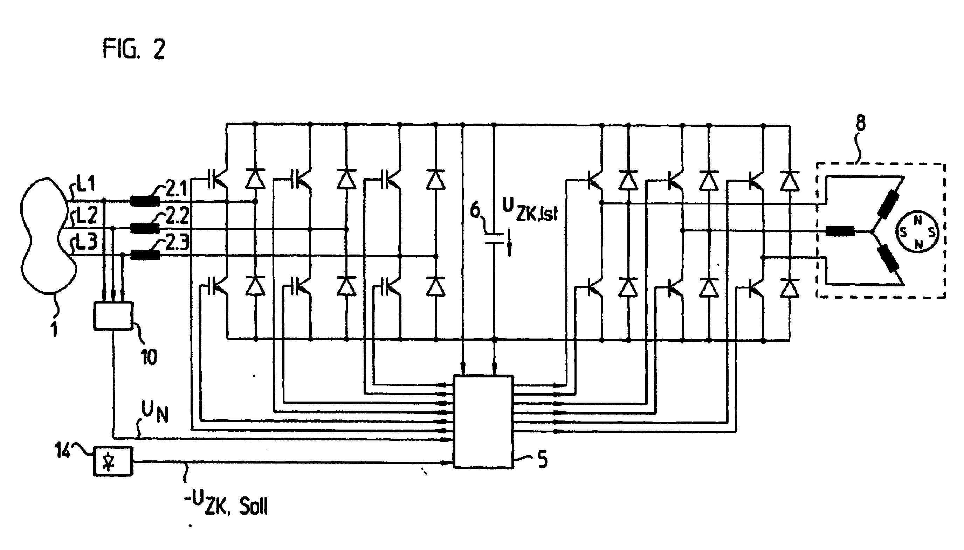

In Figur 2 ist der gesamte erfindungsgemäße Umrichter dargestellt. Man erkennt deutlich, daß der bisher verwendete herkömmliche Umrichter weiterverwendet wird und lediglich eine Ergänzung um den erfindungsgemäßen Regler aus Figur 1 erfolgt. Dieser Regler kann als analoger oder digitaler Schalkreis realisiert werden, da er im Gegensatz zum Umrichter keine hohen Ströme für eine Last 8 verarbeiten muß. Insbesondere in digitaler Realisierung kann er zumindest teilweise in die Steuereinheit 5 integriert werden. Der erfindungsgemäße Umrichter ermöglicht es, daß nunmehr nahezu beliebige Überspannungen problemlos in Antriebsspannungen und Antriebsströme für die angeschlossene Last 8 umgesetzt werden können. Dadurch sind unterschiedliche Umrichterausführungen für unterschiedliche nationale Spannungsversorgungsnetze 1, die nur geringfügig unterschiedliche Versorgungsspannungen aufweisen, nicht mehr erforderlich, so daß nicht nur die Empfindlichkeit gegenüber Überspannungen im Spannungsversorgungsnetz wegfällt, sondern auch die Produktion und die Lagerhaltung für Umrichter wesentlich vereinfacht werden kann. Diese wesentlichen Vorteile werden durch eine nur kleine zusätzlich Schaltung gemäß Figur 1 sehr kostengünstig erreicht.

## Patentansprüche

1. Verfahren zur Anpassung der Zwischenkreisgleichspannung eines rückspeisefähigen Umrichters an dessen Versorgungsspannung, wobei dem Umrichter eine mehrphasige Wechselspannung konstanter Frequenz zugeführt wird und vom Umrichter eine mehrphasige Wechselspannung veränderlicher Frequenz an eine Last abgegeben wird, und wobei die Zwischenkreisgleichspannung (U_{ZK, ist}) derart verändert wird, daß sie größer oder zumindest gleich dem gleichgerichteten Spitzenwert (U_{N}) der Versorgungsspannung ist, und wobei die Versorgungsspannung eines Spannungsversorgungsnetzes (1) in einem Gleichrichter (10) gleichgerichtet wird, **dadurch gekennzeichnet, daß** der gleichgerichtete Spitzenwert (U_{N}) der Versorgungsspannung mit einem Sollwert für die Zwischenkreisgleichspannung (U_{ZK, Soll}) verglichen wird und daß die Zwischenkreisgleichspannung (U_{ZK, ist}) erhöht wird, wenn der gleichgerichtete Spitzenwert (U_{N}) der Versorgungsspannung den Sollwert für die Zwischenkreisgleichspannung (U_{ZK,Soll}) überschreitet.

2. Verfahren nach Anspruch 1, **dadurch gekennzeichnet, daß** zusätzlich die tatsächliche Zwischenkreisgleichspannung (U_{ZK, ist}) mit dem Sollwert für die Zwischenkreisgleichspannung (U_{ZK, Soll}) verglichen wird und bei Abweichungen die tatsächliche Zwischenkreisgleichspannung (U_{ZK, ist}) entsprechend verändert wird, wodurch eine geregelte Zwischenkreisgleichspannung (U_{ZK, ist}) entsprechend dem Sollwert vorliegt.

3. Schaltungsanordnung zur Anpassung der Zwischenkreisgleichspannung eines Umrichters an die Versorgungsspannung, **dadurch gekennzeichnet, daß** die von einem Spannungsversorgungsnetz (1) bereitgestellte Versorgungsspannung einem Gleichrichter (10) zugeleitet wird, dessen Ausgangssignal (U_{N}) einem Pegelwandler (21) zugeleitet wird, daß das derart erzeugte Ausgangssignal einer Diode (13) zugeleitet und deren Ausgangssignal dem Ausgangssignal eines Referenzspannungserzeugers (14) überlagert wird, daß dieses Überlagerungssignal als negativer Sollwert der Zwischenkreisspannung (-U_{ZK, Soll}) in einer Verknüpfungsbaugruppe (15) mit dem Istwert der Zwischenkreisspannung (U_{ZK}, ᵢₛₜ) verknüpft wird und daß das derart erzeugte Reglersignal dem Spannungsregler (22) für die Zwischenkreisspannung zugeleitet wird.

4. Schaltungsanordnung nach Anspruch 3, **dadurch gekennzeichnet, daß** die Schaltungsanordnung integriert ausgeführt wird.

5. Schaltungsanordnung nach Anspruch 3 oder 4, **dadurch gekennzeichnet, daß** die Schaltungsanordnung in eine Steuereinheit (5) zur Steuerung der Transistoren (3.1, ..., 3.6) integriert ist.

## Claims

1. Method for adapting the intermediate circuit d.c. voltage of a converter, which is capable of return feeding, to its supply voltage, a polyphase a.c. voltage of constant frequency being supplied to the converter and a polyphase a.c. voltage of variable frequency being sent from the converter to a load, and the intermediate circuit d.c. voltage (U_{ZK}, _{actual}) being altered in such a way that it is greater than or at least the same as the rectified peak value (U_{N}) of the supply voltage, and the supply voltage of a voltage supply network (1) being rectified in a rectifier (10), **characterised in that** the rectified peak value (U_{N}) of the supply voltage is compared with a set value for the intermediate circuit d.c. voltage (U_{ZK, set}) and **in that** the intermediate circuit d.c. voltage (U_{ZK}, _{actual}) is increased if the rectified peak value (U_{N}) of the supply voltage exceeds the set value for the intermediate circuit d.c. voltage (U_{ZK}, ₛₑₜ) .

2. Method according to claim 1, **characterised in that** in addition the actual intermediate circuit d.c. voltage (U_{ZK}, _{actual}) is compared with the set value for the intermediate circuit d.c. voltage (U_{ZK}, ₛₑₜ) and if there is any deviation, the actual intermediate circuit d.c. voltage (U_{ZK}, _{actual}) is correspondingly altered and thus a regulated intermediate circuit d.c. voltage (U_{ZK}, _{actual}) corresponding to the set value is then present.

3. Circuit arrangement for adapting the intermediate circuit d.c. voltage of a converter to the supply voltage, **characterised in that** the supply voltage provided by a voltage supply network (1) is supplied to a rectifier (10), the output signal (U_{N}) from which is supplied to a level converter (21), **in that** the output signal thus generated is supplied to a diode (13) and its output signal is superimposed on the output signal of a reference voltage generator (14), **in that** this superimposed signal is linked as a negative set value of the intermediate circuit voltage (-U_{ZK, set}) in a logic module (15) to the actual value of the intermediate circuit voltage (U_{ZK}, _{actual}) and **in that** the regulator signal thus generated is supplied to the voltage regulator (22) for the intermediate circuit voltage.

4. Circuit arrangement according to claim 3, **characterised in that** the circuit arrangement is designed integrated.

5. Circuit arrangement according to claim 3 or 4, **characterised in that** the circuit arrangement is integrated into a control unit (5) for controlling the transistors (3.1, ..., 3.6).

## Revendications

1. Procédé pour ajuster la tension de circuit intermédiaire d'un convertisseur capable d'alimentation en retour, à la tension d'alimentation de ce convertisseur, selon lequel au convertisseur est envoyé une tension alternative polyphasée à fréquence constante, tandis que le convertisseur délivre à une résistance une tension alternative polyphasée à fréquence modifiée, la tension de circuit intermédiaire (U_{ZK,ist}) étant modifiée de manière à être au moins égale à la valeur de pointe redressée (U_{N}) de la tension d'alimentation, qui est celle d'un circuit d'alimentation (1) et qui est redressée dans un redresseur 10, **caractérisé en ce que** la valeur de pointe redressée (U_{N}) de la tension d'alimentation est comparée à une valeur de consigne de la tension continue de circuit intermédiaire (U_{ZK,soll}), et la tension réelle (U_{ZK,ist}) de ce circuit intermédiaire est augmentée si la valeur de pointe redressée (U_{N}) dépasse la valeur de consigne (U_{ZK,soll}) de la tension continue du circuit intermédiaire.

2. Procédé selon la revendication 1, **caractérisé en ce qu'**en plus la tension réelle continue de circuit intermédiaire (U_{ZK,ist}) est comparée à sa valeur de consigne (U_{ZK,soll}) et, en présence d'écarts, cette tension réelle (U_{ZK,ist}) est modifiée en conséquence, de sorte qu'est obtenue une tension (U_{ZK,ist}) régulée correspondant à la valeur de consigne.

3. Système de circuit pour ajuster la tension continue de circuit intermédiaire d'un convertisseur à la tension d'alimentation, **caractérisé en ce que** la tension d'alimentation mise à disposition par un réseau d'alimentation de tension (1) est envoyée à un redresseur (10) dont le signal de sortie (U_{N}) est envoyé à un convertisseur de niveau (21), que le signal de sortie ainsi obtenu est envoyé à une diode (13) dont le signal de sortie est superposé au signal de sortie d'un générateur de tension de référence (14), que ce signal de superposition, en tant que valeur de consigne négative de la tension de circuit intermédiaire (- U_{ZK,soll}) est combiné à la valeur réelle de la tension de circuit intermédiaire (U_{ZK,ist}) et le signal de régulation ainsi obtenu est envoyé au régulateur (22) de la tension de circuit intermédiaire.

4. Système de circuit selon la revendication 3, **caractérisé en ce que** ce système est intégré.

5. Système de circuit selon la revendication 3 ou 4, **caractérisé en ce que** ce système est intégré à une unité (5) de commande des transistors (3.1, ..., 3.6).
